# EUROPÄISCHE PATENTSCHRIFT

(11) **EP 2 200 194 B1**
(45) Veröffentlichungstag und Bekanntmachung des Hinweises auf die Patenterteilung: **10.04.2013**
(21) Anmeldenummer: 09075544.8
(22) Anmeldetag: 08.12.2009
(51) Int. Cl.: H04B 10/60, G02B 6/42

(54) **Detektormodul**
Detector module
Module de détecteur

(30) Priorität: 19.12.2008 DE 102008063838
(43) Veröffentlichungstag der Anmeldung: 23.06.2010
(73) Patentinhaber: u2t Photonics AG, 10553 Berlin (DE)
(72) Erfinder: Steffan, Andreas Gerhard, 10717 Berlin (DE); Tsianos, Georgios, 10555 Berlin (DE)
(74) Vertreter: Fischer, Uwe

(56) Entgegenhaltungen:
- US-A1- 2002 131 135
- US-A1- 2003 072 009
- US-A1- 2003 151 818

## Beschreibung

Die Erfindung bezieht sich auf ein Detektormodul für den Empfang optischer Signale mit den Merkmalen gemäß dem Oberbegriff des Anspruchs 1.

Derartige Detektormodule weisen bekanntermaßen ein Modulgehäuse, das mindestens eine elektrische und mindestens eine optische Durchführung besitzt, zumindest eine mit der elektrischen Durchführung in Verbindung stehende elektrische Baugruppe und zumindest eine mit der optischen Durchführung in Verbindung stehende optische Baugruppe auf, wobei die elektrische und die optische Baugruppe innerhalb des Modulgehäuses angeordnet sind, die optische und die elektrische Baugruppe über mindestens eine optische Schnittstelle miteinander verbunden sind und die elektrische Baugruppe mindestens eine Fo-Lodiode zur Umwandlung der optischen Ausgangssignale der optischen Baugruppe in elektrische Signale aufweist.

Bei der Übertragung von hochbitratigen Datensignalen mittels hoherwertiger Modulationsformate, wie z.B. D(Q) PSK, (DP) QPSK, n-QAM etc., werden die in der Amplitude und Phase des optischen Signals kodierten Informationen mittels einer optischen Baugruppe in reine optische Amplitudensignale umgewandelt, die dann von der elektrischen Baugruppe und den darin enthaltenen Fotodioden in elektrische Signale umgewandelt werden. Ein wichtiger Punkt bei der Entwicklung und Herstellung kleiner und kostengünstiger Komponenten, wie zum Beispiel von Gegenstücken von DSL-Modems in der Vermittlungsstelle (so genannte "Linecards") und Transpondern, ist die Integration der verschiedenen Funktionalitäten in einem Gehäuse. Kritisch ist dabei vor allem, dass vorgegebene Gehäusehöhen nicht überschritten werden dürfen und die elektrischen Hochfrequenzdurchführungen vorgegebene Höhen aufweisen müssen, die durch andere, dem Detektormodul nachgeordnete Module - wie beispielsweise ein elektrischer Demultiplexer - vorgegeben sind. Für Standard-Linecards entspricht die maximale Gehäusehöhe beispielsweise 8,5 mm und für Small-Form-Factor (SFF) Transponder beispielsweise 6,5 mm. Die vorgegebene Höhe für die elektrischen Hochfrequenzdurchführungen beträgt beispielsweise 3,32 mm und wird bestimmt durch die Höhe der Hochfrequenzeingänge eines sich am Markt durchgesetzten elektrischen Demultiplexers (siehe z.B. Sierra Monolithics SMI4034 und SMI4036).

Ein Detektormodul mit den Merkmalen gemäß dem Oberbegriff des Patentanspruchs 1 ist aus der US-Patentanmeldung US 2003/0151818A1 bekannt.

Die US-Patentanmeldung US 2003/0072009A1 beschreibt eine Anordnung mit einem einstellbaren Freistrahlfilter, das zur Wellenlängenauswahl dient.

Die US-Patentanmeldung US 2002/0131135A1 offenbart einen optischen Empfänger mit Verzögerungselementen.

Ausgehend von den beschriebenen Anforderungen liegt der Erfindung die Aufgabe zugrunde, ein Detektormodul anzugeben, das sich besonders einfach fertigen lässt und mit dem sich gleichzeitig die beschriebenen vorgegebenen Dimensionierungen einhalten lassen.

Diese Aufgabe wird erfindungsgemäß durch ein Detektormodul mit den Merkmalen gemäß Patentanspruch 1 gelöst. Vorteilhafte Ausgestaltungen des erfindungsgemäßen Detektormoduls sind in Unteransprüchen angegeben.

Mit Blick auf die Möglichkeit, auch hochbitratige Datensignale mittels höherwertiger Modulationsformate, wie z.B. D (Q) PSK, (DP) QPSK, n-QAM etc., empfangen zu können, ist vorgesehen, dass die optische Baugruppe eine optische Demodulationseinrichtung aufweist, die ein eingangsseitig anliegendes phasenmoduliertes optisches Signal in zumindest ein Signalpaar mit zwei zueinander orthogonalen amplitudenmodulierten optischen Signalen umwandelt, und die optische Baugruppe die zumindest zwei orthogonalen amplitudenmodulierten optischen Signale mit jeweils einem separaten Strahlenbündel zu der elektrischen Baugruppe überträgt.

Ein wesentlicher Vorteil des erfindungsgemäßen Detektormoduls ist darin zu sehen, dass zwischen der optischen und der elektrischen Baugruppe keine Glasfaserverbindung benötigt wird, wodurch der Gesamtplatzbedarf drastisch reduziert wird.

Ein weiterer wesentlicher Vorteil des erfindungsgemäßen Detektormoduls besteht darin, dass aufgrund der Freistrahlverbindung die elektrische und die optische Baugruppe separat bzw. getrennt aufgebaut werden können, bevor sie in das Modulgehäuse eingesetzt werden; die Verbindung der beiden Baugruppen erfolgt nachfolgend durch die Freistrahlverbindung berührungslos. Durch einen separaten Komplettaufbau der beiden Baugruppen lässt sich eine besonders große interne Stabilität und Integrität jeder einzelnen Baugruppe gewährleisten. Stabilität und Integrität sind besonders bei optischen Baugruppen vorteilhaft, die als Delay-Line-Interferometer ausgelegt sind und bei denen die Interferenz zweier unterschiedlicher Strahlengänge ausgenutzt wird. Aber auch für die elektrische Baugruppe hat ein separater Aufbau viele Vorteile, da die elektrischen Komponenten nur relativ zur elektrischen Durchführung ausgerichtet werden müssen, ohne dass dabei auf die Justage relativ zur vorgeordneten optischen Baugruppe geachtet werden muss; die optische Baugruppe wird nämlich vorzugsweise erst nach der elektrischen Baugruppe in das Modulgehäuse eingebaut und mittels der Freistrahlverbindung relativ zu der elektrischen Baugruppe justiert.

Ein weiterer wesentlicher Vorteil des erfindungsgemäßen Detektormoduls besteht darin, dass aufgrund der Freistrahlverbindung äußere Einflüsse, wie z.B. Temperaturänderungen oder mechanische Beanspruchungen durch die Montage des Gehäuses, keinen nennenswerten Einfluss auf die Koppeleffizienz zwischen den beiden Baugruppen und damit die Gesamtperformance des Detektormoduls haben.

Um zu vermeiden, dass eine optische Justage an der Eingangsseite der optischen Baugruppe nötig ist, wird es als vorteilhaft angesehen, wenn der Kollimator eingangsseitig an einen Lichtwellenleiter angeschlossen ist, der durch die optische Durchführung hindurchgeführt ist. Beispielsweise bilden der Kollimator und der Lichtwellenleiter ein sogenanntes Kollimator-Pigtail (Kollimator mit Faserende).

Zur Weiterverarbeitung des Empfangssignals wird es als vorteilhaft angesehen, wenn die elektrische Baugruppe einen der Fotodiode nachgeordneten Verstärker enthält.

Die Fotodioden können beispielsweise durch einzelne separate Fotodioden oder Fotodiodenarrays und die zugeordneten Verstärker beispielsweise durch einzelne separate Verstärker oder durch Verstärkerarrays gebildet sein.

Vorzugsweise weist die elektrische Baugruppe zumindest einen Leiterbahnträger mit ganz- oder teilweise-HF optimierten Leiterbahnen auf, wobei sich auf der Oberseite des Leiterbahnträgers die elektrischen Verbindungen für die Fotodiode befinden.

Die elektrische Baugruppe kann beispielsweise komplett oder in Teilen auf der Innenseite des Modulgehäuses montiert und mit der elektrischen Durchführung verbunden sein.

Bevorzugt sind zumindest eine, vorzugsweise alle der die elektrische Baugruppe bildenden Komponenten derart ausgestaltet, dass die Baugruppe beim Einsetzen in das Modulgehäuse nur relativ zur elektrischen Durchführung justiert werden muss.

Die optische Baugruppe kann beispielsweise ein Trägersubstrat aufweisen, an oder auf dem die übrigen Komponenten der optischen Baugruppe montiert sind. Vorzugsweise ist die optische Baugruppe mit zumindest einem mechanischen, elektrischen, elektro-thermischen und/oder elektro-mechanischen Stellglied ausgestattet.

Die elektrische und die optische Baugruppe können beispielsweise derart zueinander orientiert sein, dass die Oberseiten der Baugruppen in die gleiche Richtung zeigen. Alternativ können die Oberseiten der Baugruppen auch in entgegengesetzte Richtungen zeigen.

Um einen Höhenausgleich zwischen dem Höhenniveau der optischen Freistrahlverbindung und der elektrischen Durchführung des Modulgehäuses herzustellen oder zu einem solchen beizutragen, kann die elektrische Baugruppe beispielsweise mindestens einen Leiterbahnträger aufweisen, der gegenüber der Ebene des Modulgehäusebodens verkippt ist.

Die Komponenten der elektrischen Baugruppe können außerdem derart in der Höhe abgestuft angeordnet sein, dass ein Höhenausgleich zwischen dem Höhenniveau der optischen Freistrahlverbindung der elektrischen Baugruppe und der elektrischen Durchführung des Modulgehäuses hergestellt oder zu einem solchen beigetragen wird.

Auch kann die elektrische Baugruppe mindestens eine Linse aufweisen, die ein von der optischen Baugruppe empfangenes Strahlenbündel auf der Fotodiode fokussiert.

Vorzugsweise bestehen zwischen der elektrischen Baugruppe und der optischen Baugruppe mindestens zwei parallele Freistrahlverbindungen mit jeweils einem Strahlenbündel, wobei die elektrische Baugruppe ein einteiliges Linsenarray mit mindestens zwei Linsen zur Fokussierung der Strahlenbündel auf zugeordnete Fotodioden aufweist.

Die Erfindung wird nachfolgend anhand von Ausführungsbeispielen näher erläutert: Dabei zeigen beispielhaft:
- Figur 1: ein erstes Ausführungsbeispiel für ein erfindungsgemäßes Detektormodul, bei dem eine optische Baugruppe eine optische Demodulationseinrichtung aufweist und ausgangsseitig zwei Strahlenbündel erzeugt;
- Figur 2: das Detektormodul gemäß Figur 1 in einer Draufsicht;
- Figur 3: ein Ausführungsbeispiel für den inneren Aufbau der Demodulationseinrichtung des Detektormoduls gemäß den Figuren 1 und 2;
- Figur 4: ein zweites Ausführungsbeispiel für ein erfindungsgemäßes Detektormodul, bei dem die elektrische Baugruppe zumindest eine Fotodiode, zumindest einen Verstärker und zumindest einen Leiterbahnträger aufweist, wobei der Leiterbahnträger, der Verstärker und die Fotodiode auf einer planen Trägerplatte angeordnet sind;
- Figur 5: ein drittes Ausführungsbeispiel für ein erfindungsgemäßes Detektormodul, bei dem mit einem Zwischenelement in der elektrischen Baugruppe eine Bauhöhenanpassung erfolgt und der Leiterbahnträger gekippt angeordnet ist;
- Figur 6: ein viertes Ausführungsbeispiel für ein erfindungsgemäßes Detektormodul, bei dem Zwischenelemente mit unterschiedlicher Höhe eine Bauhöhenanpassung innerhalb der elektrischen Baugruppe bewirken und
- Figur 7: ein fünftes Ausführungsbeispiel für ein erfindungsgemäßes Detektormodul, bei dem die optische Baugruppe - relativ zur elektrischen Baugruppe - kopfüber in dem Modulgehäuse montiert ist.

In den Figuren werden der Übersicht halber für identische oder vergleichbare Komponenten stets dieselben Bezugszeichen verwendet.

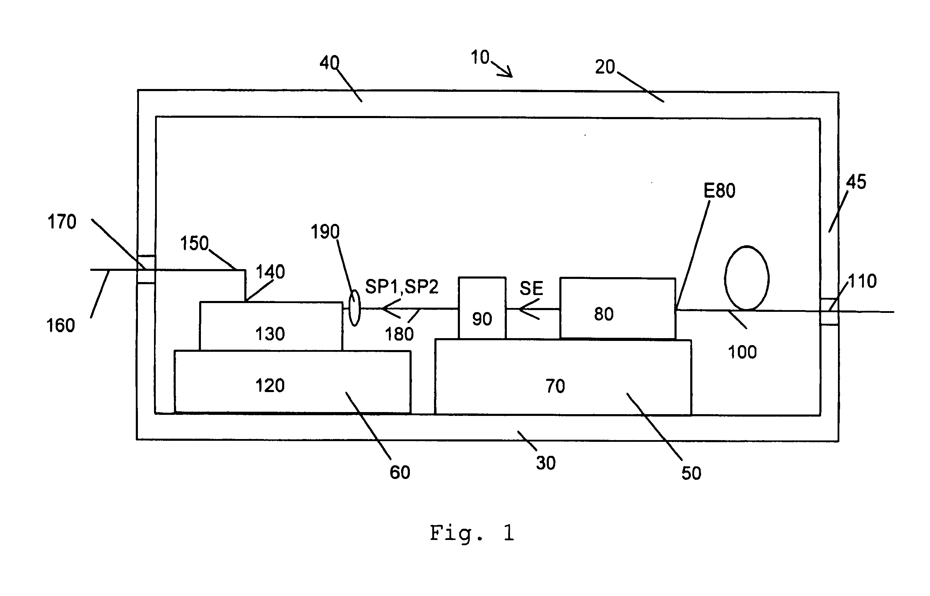

In der Figur 1 ist ein Ausführungsbeispiel für ein Detektormodul 10 dargestellt. Das Detektormodul weist ein Modulgehäuse 20 mit einer Bodenplatte 30, einem Deckel 40 sowie Seitenwänden 45 auf. Auf der Bodenplatte 30 des Modulgehäuses 20 sind eine optische Baugruppe 50 sowie eine elektrische Baugruppe 60 angeordnet.

Die optische Baugruppe 50 umfasst einen Träger 70, auf dem ein Kollimator 80 sowie eine Demodulationseinrichtung 90 angeordnet sind. An den Eingang E80 des Kollimators 80 ist ein Ende eines Lichtwellenleiters 100, bei dem es sich beispielsweise um eine Glasfaser handeln kann, angeschlossen. Das andere Ende des Lichtwellenleiters 100 ist durch eine optische Durchführung 110 in der Seitenwand 45 des Modulgehäuses 20 nach außen geführt.

Die elektrische Baugruppe 60 umfasst einen Träger 120, auf dem zumindest ein Fotodiodenarray (Fotodiodenfeld) 130 mit beispielsweise zwei Fotodioden angeordnet ist. Mit dem Fotodiodenarray 130 steht ein Ende 140 einer elektrischen Leitung 150 in Verbindung, deren anderes Ende 160 durch eine elektrische Durchführung 170 im Modulgehäuse 20 nach außen hindurchgeführt ist. Anstelle einer einzigen Leitung können auch mehrere elektrische Leitungen vorhanden sein, die durch eine oder mehrere elektrische Durchführungen aus dem Modulgehäuse herausgeführt werden.

Die elektrische Baugruppe 60 und die optische Baugruppe 50 sind über eine Freistrahlverbindung 180 optisch miteinander gekoppelt. Um hierbei zu erreichen, dass die von der optischen Baugruppe 50 erzeugten elektromagnetischen Strahlen möglichst effizient in das Fotodiodenarray 130 eingekoppelt werden, kann die elektrische Baugruppe 60 beispielsweise mindestens ein Linsenarray (Linsenfeld) 190 aufweisen, das jedes von der optischen Baugruppe 50 erzeugte Strahlenbündel fokussiert; beispielsweise wird jedes Lichtbündel jeweils einer Fotodiode des Fotodiodenarrays 130 zugeordnet.

Bei dem Ausführungsbeispiel gemäß Figur 1 ist die Demodulationseinrichtung 90 beispielsweise derart ausgestaltet, dass sie mit einem eingangsseitig anliegenden phasenmodulierten optischen Signal SE zumindest ein Signalpaar mit zwei zueinander orthogonalen, amplitudenmodulierten, optischen Signalen SP1 und SP2 erzeugt. Die beiden zueinander orthogonalen, amplitudenmodulierten, optischen Signale SP1 und SP2 werden jeweils mit einem separaten Strahlenbündel über die Freistrahlverbindung 180 zu der elektrischen Baugruppe 60 übertragen. Das Fotodiodenarray 130 wandelt die einfallenden Strahlenbündel in elektrische Signale um, die über die mindestens eine elektrische Leitung 150 durch die elektrische Durchführung 170 hindurch aus dem Modulgehäuse 20 herausgeführt werden.

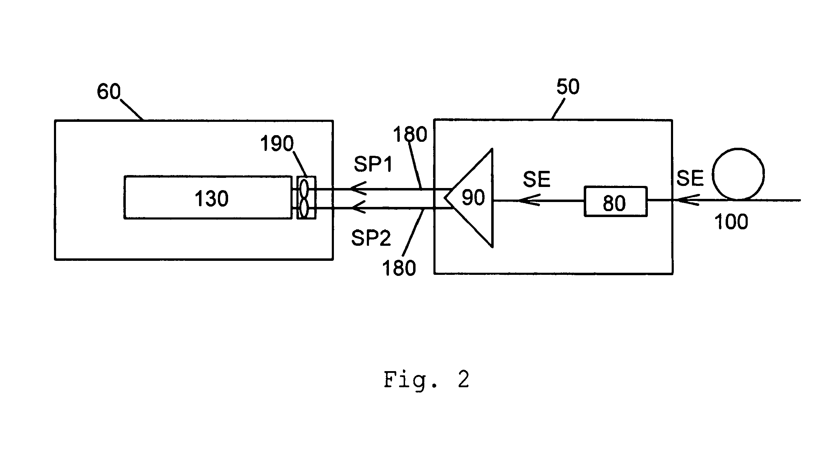

In der Figur 2 ist der Aufbau der elektrischen Baugruppe 60 und der optischen Baugruppe 50 gemäß Figur 1 nochmals in der Draufsicht gezeigt. Man erkennt, dass die zwei zueinander orthogonalen, amplitudenmodulierten, optischen Signale SP1 und SP2 über jeweils ein eigenes Strahlenbündel, also jeweils über eine eigene Freistrahlverbindung 180, übertragen werden und von dem Linsenarray 190 auf dem Fotodiodenarray 130 fokussiert werden. Das Modulgehäuse des Detektormoduls sowie die elektrischen und die optischen Durchführungen sind in der Figur 2 der Übersicht halber nicht dargestellt.

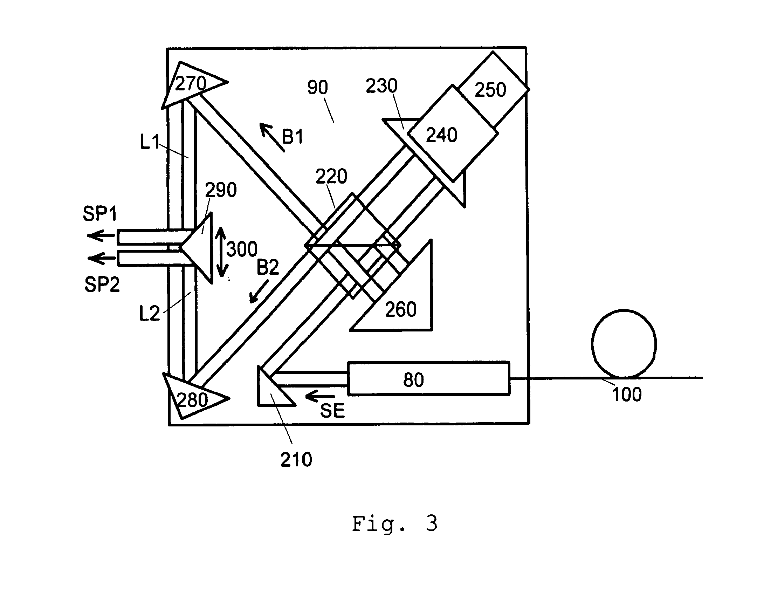

In der Figur 3 ist ein Ausführungsbeispiel für den Aufbau der Demodulationseinrichtung 90 gemäß Figuren 1 und 2 gezeigt. Die Demodulationseinrichtung 90 weist eingangsseitig einen Umlenkspiegel 210 auf, der das von dem Kollimator 80 kommende phasenmodulierte optische Signal SE in Richtung eines Strahlteilers 220 lenkt. Ein kollimierter Strahlenanteil gelangt zu einem Retro-Reflektor-Element 230, das von einem Heizelement 240 und einem Piezoelement 250 eingestellt werden kann, und von dort zurück zu dem Strahlteiler 220. Der andere kollimierte Strahlenanteil gelangt zu einem Spiegel 260 und wird von diesem zurück zu dem Strahlteiler 220 gelenkt. Mit den zurückkommenden kollimierten Strahlenanteilen werden von dem Strahlteiler 220 zwei kollimierte Ausgangsstrahlbündel B1 und B2 gebildet und in Richtung zweier Spiegel 270 und 280 gelenkt, die die Ausgangsstrahlbündel B1 und B2 in Richtung eines als "Nase" ausgebildeten Spiegels 290 lenken. Durch Verschieben der Nase entlang der Pfeilrichtung 300 lässt sich der Wegunterschied zwischen den optischen Wegen L1 und L2 einstellen, beispielsweise auf Null. Am Ausgang der Nase 290 werden die beiden zueinander orthogonalen, amplitudenmodulierten, optischen Signale SP1 und SP2 ausgegeben.

Der Abstand der beiden optischen Signale SP1 und SP2 ist sehr genau einstellbar, beispielsweise auf einen Wert von 250 µm; vorzugsweise wird der Abstand der Signale so eingestellt, dass er dem Abstand der Linsen des Linsenarrays 190 gemäß Figur 2 entspricht.

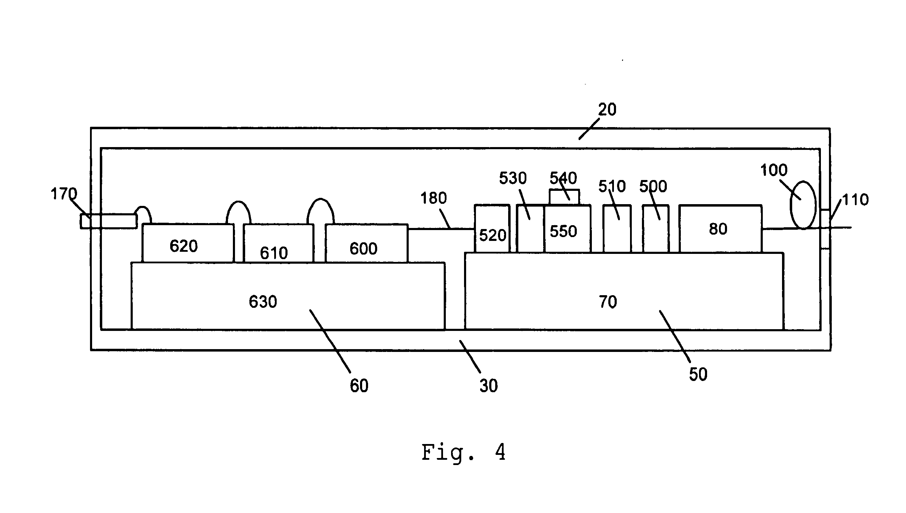

In der Figur 4 ist ein zweites Ausführungsbeispiel für ein Detektormodul dargestellt. Man erkennt, dass auf dem Träger 70 der optischen Baugruppe 50 ein Kollimator 80, ein Strahlteiler 500, zwei Spiegel 510 und 520, ein Piezoelement 530, ein Heizelement 540 sowie ein Retro-Reflektor-Element 550 angeordnet sind. Der Strahlteiler 500, die beiden Spiegel 510 und 520, das Piezoelement 530, das Heizelement 540 sowie das Retro-Reflektor-Element 550 bilden die Demodulationseinrichtung der optischen Baugruppe 50.

In der Figur 4 erkennt man außerdem, dass das elektrische Bauelement 60 zumindest eine Fotodiode 600, zumindest einen Verstärker 610 und zumindest einen Leiterbahnträger 620 umfasst. Die drei Elemente, also die Fotodiode 600, der Verstärker 610 sowie der Leiterbahnträger 620, sind auf einer planen Trägerplatte 630 des elektrischen Bauelements 60 angeordnet. Eine solche plane Trägerplatte 630 ist insbesondere dann vorteilhaft, wenn die Höhe der Freistrahlverbindung 180, also der Abstand der Freistrahlverbindung 180 von der Bodenplatte 30 des Modulgehäuses 20, ungefähr der Höhe der elektrischen Durchführung 170 entspricht, so dass keine Höhenanpassung zwischen der elektrischen Durchführung 170 und der Freistrahlverbindung 180 erfolgen muss.

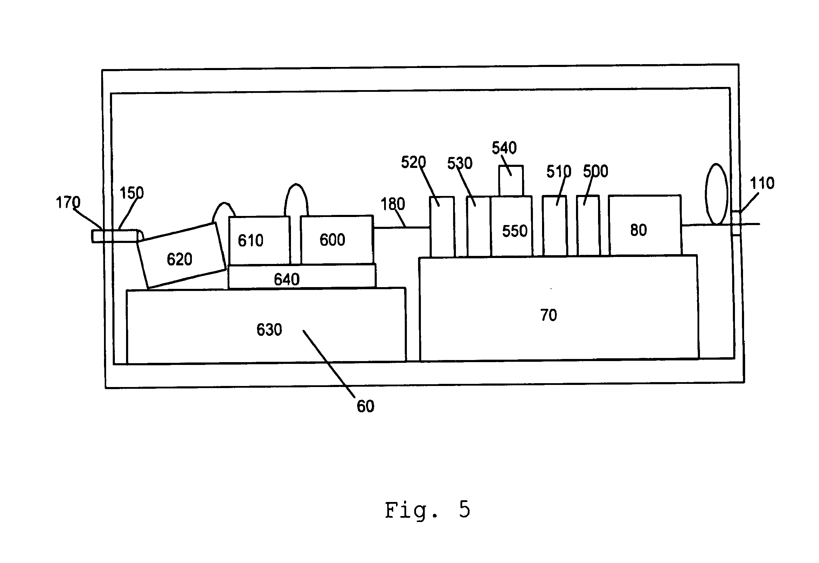

In der Figur 5 ist ein drittes Ausführungsbeispiel für ein Detektormodul gezeigt. Bei diesem Ausführungsbeispiel ist auf der planen Trägerplatte 630 der elektrischen Baugruppe 60 ein Zwischenelement 640 angeordnet, das eine Höhenanpassung bewirkt, damit die optische Freistrahlverbindung 180 zwischen dem Spiegel 520 und der Fotodiode 600 ermöglicht wird. Um einen einfachen elektrischen Anschluss zwischen dem Verstärker 610 und der Fotodiode 600 zu ermöglichen, ist auch der Verstärker 610 auf dem Zwischenelement 640 angeordnet.

Durch das Zwischenelement 640 ergibt sich jedoch ein Höhenunterschied zwischen dem Verstärker 610 und der elektrischen Durchführung 170; dieser Höhenunterschied wird bei dem Ausführungsbeispiel gemäß Figur 5 dadurch ausgeglichen, dass der Leiterbahnträger 620 gekippt montiert wird. Dies ermöglicht es, den bezogen auf die Höhe der elektrischen Durchführung 170 zu hoch angeordneten Verstärker 610 dennoch problemlos an die elektrische Leitung 150, die durch die Durchführung 170 hindurchgeführt ist, anzuschließen.

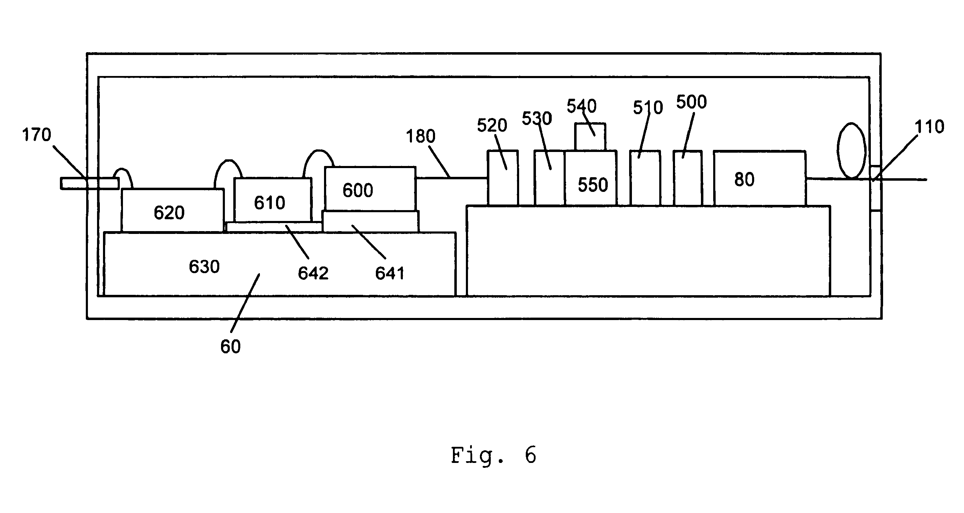

In der Figur 6 ist ein viertes Ausführungsbeispiel für ein Detektormodul gezeigt. Bei diesem Ausführungsbeispiel sind zwei unterschiedlich dicke bzw. unterschiedlich hohe Zwischenelemente 641 und 642 vorhanden. Das Zwischenelement 641 dient zur Montage der Fotodiode 600 auf der planen Trägerplatte 630. Das Zwischenelement 642 befestigt den Verstärker 610 auf der Trägerplatte 630.

Dadurch, dass die beiden Zwischenelemente 641 und 642 unterschiedlich hoch bzw. unterschiedlich dick dimensioniert sind, kann eine Höhenanpassung zwischen Leiterbahnträger 620, Verstärker 610 und Fotodiode 600 sowie ggf. außerdem ein Höhenunterschied zwischen der elektrischen Durchführung 170 und der Freistrahlverbindung 180 ausgeglichen werden.

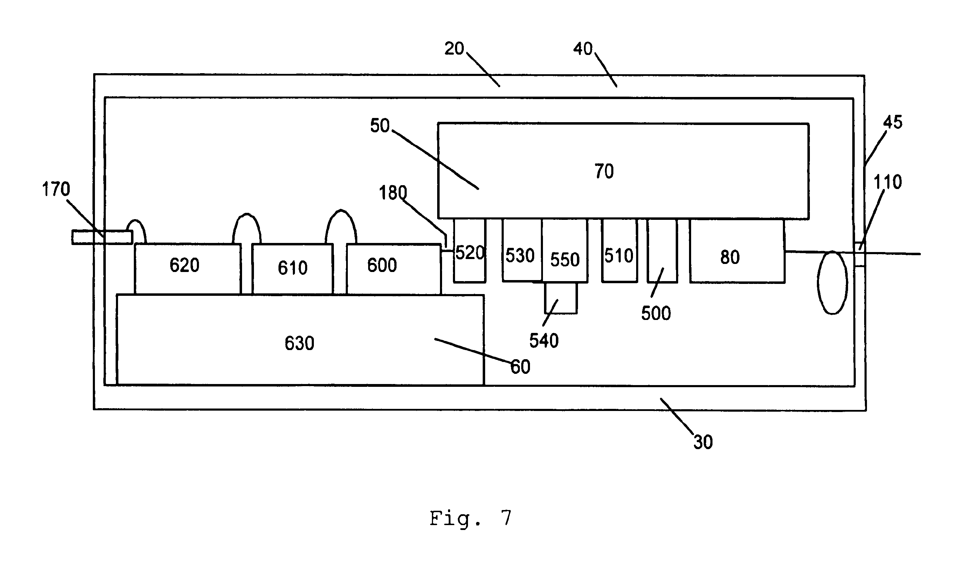

In der Figur 7 ist ein fünftes Ausführungsbeispiel für ein Detektormodul gezeigt. Bei diesem Ausführungsbeispiel sind die elektrische Baugruppe 60 sowie die optische Baugruppe 50 relativ zueinander kopfüber angeordnet. So ist bei dem Ausführungsbeispiel gemäß Figur 7 die elektrische Baugruppe 60 mit ihrer Trägerplatte 630 auf der Bodenplatte 30 des Modulgehäuses 20 angeordnet. Die optische Baugruppe 50 ist kopfüber montiert, wobei jedoch eine Freistrahlverbindung 180 zwischen dem Spiegel 520 und der Fotodiode 600 gewährleistet bleibt.

Die Befestigung der optischen Baugruppe 50 innerhalb des Modulgehäuses 20 ist dabei beliebig. So kann der Träger 70 der optischen Baugruppe 50 an dem Deckel 40 des Modulgehäuses 20, an der Seitenwand 45 des Modulgehäuses 20 oder mit Hilfe in der Figur 7 nicht weiter dargestellter zusätzlicher Befestigungselemente auf der Bodenplatte 30 des Modulgehäuses 20 befestigt sein.

### Bezugszeichenliste

- 10: Detektormodul
- 20: Modulgehäuse
- 30: Bodenplatte
- 40: Deckel
- 45: Seitenwand
- 50: optische Baugruppe
- 60: elektrische Baugruppe
- 70: Träger
- 80: Kollimator
- 90: Demodulationseinrichtung
- 100: Lichtwellenleiter
- 110: optische Durchführung
- 120: Träger
- 130: Fotodiodenarray
- 140: Ende
- 150: elektrische Leitung
- 160: Ende
- 170: elektrische Durchführung
- 180: Freistrahlverbindung
- 190: Linsenarray
- 210: Umlenkspiegel
- 220: Strahlteiler
- 230: Retro-Reflektor-Element
- 240: Heizelement
- 250: Piezoelement
- 260: Spiegel
- 270: Spiegel
- 280: Spiegel
- 290: Spiegel (Nase)
- 300: Pfeilrichtung
- 500: Strahlteiler
- 510: Spiegel
- 520: Spiegel
- 530: Piezoelement
- 540: Heizelement
- 550: Retro-Reflektor-Element
- 600: Fotodiode
- 610: Verstärker
- 620: Leiterbahnträger
- 630: Trägerplatte
- 640: Zwischenelement
- 641: Zwischenelement
- 642: Zwischenelement

- B1: Ausgangsstrahlbündel
- B2: Ausgangsstrahlbündel
- E80: Eingang
- L1: optischer Weg
- L2: optischer Weg
- SE: Signal
- SP1: Signal
- SP2: Signal

## Patentansprüche

1. Detektormodul (10) für den Empfang optischer Signale (S-E) mit
- einem Modulgehäuse (20), das mindestens eine elektrische und mindestens eine optische Durchführung (110, 170) besitzt,
- zumindest einer mit der elektrischen Durchführung (170) in Verbindung stehenden elektrischen Baugruppe (60) und
- zumindest einer mit der optischen Durchführung (110) in Verbindung stehenden optischen Baugruppe (50), wobei
- die elektrische und die optische Baugruppe innerhalb des Modulgehäuses (20) angeordnet sind,
- die optische und die elektrische Baugruppe über mindestens eine optische Schnittstelle miteinander verbunden sind und
- die elektrische Baugruppe mindestens eine Fotodiode zur Umwandlung der optischen Ausgangssignale der optischen Baugruppe in elektrische Signale aufweist,
- wobei die optische Baugruppe mindestens einen Kollimator (80) aufweist und ausgangsseitig mindestens ein Strahlenbündel mit parallel zueinander verlaufenden, kollimierten elektromagnetischen Strahlen über eine Freistrahlverbindung (180) als optische Schnittstelle zu der elektrischen Baugruppe überträgt und
- wobei die elektrische Baugruppe das Strahlenbündel über die Freistrahlverbindung von der optischen Baugruppe empfängt,
**dadurch gekennzeichnet, dass**
- die optische Baugruppe eine optische Demodulationseinrichtung (90) aufweist, die ein eingangsseitig anliegendes phasenmoduliertes optisches Signal in zumindest ein Signalpaar mit zwei zueinander orthogonalen amplitudenmodulierten optischen Signalen (SP1, SP2) umwandelt, und
- die optische Baugruppe die zumindest zwei orthogonalen amplitudenmodulierten optischen Signale mit jeweils einem separaten Strahlenbündel zu der elektrischen Baugruppe überträgt.

2. Detektormodul nach Anspruch 1, **dadurch gekennzeichnet,**
**dass** der Kollimator eingangsseitig an einen Lichtwellenleiter (100) angeschlossen ist, der durch die optische Durchführung hindurchgeführt ist.

3. Detektormodul nach einem der voranstehenden Ansprüche, **dadurch gekennzeichnet, dass**
die elektrische Baugruppe einen zur Fotodiode zugeordneten Verstärker enthält.

4. Detektormodul nach einem der voranstehenden Ansprüche, **dadurch gekennzeichnet, dass**
die Fotodioden durch einzelne separate Fotodioden oder Fotodiodenarrays (130) und die zugeordneten Verstärker durch einzelne separate Verstärker oder durch Verstärkerarrays gebildet sind.

5. Detektormodul nach einem der voranstehenden Ansprüche, **dadurch gekennzeichnet, dass**
die elektrische Baugruppe zumindest einen Leiterbahnträger (620) mit ganz- oder teilweise-HF optimierten Leiterbahnen aufweist, wobei sich auf der Oberseite des Leiterbahnträgers die elektrischen Verbindungen für die Fotodiode befinden.

6. Detektormodul nach einem der voranstehenden Ansprüche, **dadurch gekennzeichnet, dass**
die elektrische Baugruppe komplett oder in Teilen auf der Innenseite des Modulgehäuses montiert ist und mit der elektrischen Durchführung verbunden ist.

7. Detektormodul nach einem der voranstehenden Ansprüche, **dadurch gekennzeichnet, dass**
zumindest eine, vorzugsweise alle der die elektrische Baugruppe bildenden Komponenten derart ausgestaltet sind, dass die Baugruppe beim Einsetzen in das Modulgehäuse nur relativ zur elektrischen Durchführung justiert werden muss.

8. Detektormodul nach einem der voranstehenden Ansprüche, **dadurch gekennzeichnet, dass**
die optische Baugruppe einen Träger (70) aufweist, an oder auf dem die übrigen Komponenten der optischen Baugruppe montiert sind.

9. Detektormodul nach einem der voranstehenden Ansprüche, **dadurch gekennzeichnet, dass**
die optische Baugruppe zumindest ein mechanisches, elektrisches, elektro-thermisches und/oder elektro-mechanisches Stellglied aufweist.

10. Detektormodul nach einem der voranstehenden Ansprüche, **dadurch gekennzeichnet, dass**
die elektrische und optische Baugruppe derart zueinander orientiert sind, dass die Oberseiten der Baugruppen in die gleiche Richtung zeigen.

11. Detektormodul nach einem der voranstehenden Ansprüche, **dadurch gekennzeichnet, dass**
die elektrische Baugruppe mindestens einen Leiterbahnträger (620) aufweist, der gegenüber der Ebene des Modulgehäusebodens derart verkippt ist, dass er einen Höhenausgleich zwischen dem Höhenniveau der optischen Freistrahlverbindung der elektrischen Baugruppe und der elektrischen Durchführung des Modulgehäuses herstellt oder zu einem solchen beiträgt.

12. Detektormodul nach einem der voranstehenden Ansprüche, **dadurch gekennzeichnet, dass**
die Komponenten der elektrischen Baugruppe derart in der Höhe abgestuft angeordnet sind, dass ein Höhenausgleich zwischen dem Höhenniveau der optischen Freistrahlverbindung der elektrischen Baugruppe und der elektrischen Durchführung des Modulgehäuses hergestellt oder zu einem solchen beigetragen wird.

13. Detektormodul nach einem der voranstehenden Ansprüche, **dadurch gekennzeichnet, dass**
die elektrische und die optische Baugruppe derart zueinander orientiert sind, dass die Oberseiten der Baugruppen in entgegengesetzte Richtungen zeigen.

14. Detektormodul nach einem der voranstehenden Ansprüche, **dadurch gekennzeichnet, dass**
die elektrische Baugruppe mindestens eine Linse aufweist, die ein von der optischen Baugruppe empfangenes Strahlenbündel auf der Fotodiode fokussiert.

15. Detektormodul nach einem der voranstehenden Ansprüche, **dadurch gekennzeichnet, dass**
zwischen der elektrischen Baugruppe und der optischen Baugruppe mindestens zwei parallele Freistrahlverbindungen mit jeweils einem Strahlenbündel bestehen, wobei die elektrische Baugruppe ein einteiliges Linsenarray (190) mit mindestens zwei Linsen zur Fokussierung der Strahlenbündel auf zugeordnete Fotodioden aufweist.

## Claims

1. A detector module (10) for the reception of optical signals (SE) comprising
- a module housing (20) having at least one electrical and at least one optical passage (110, 170),
- at least one electrical assembly (60) connected to the electrical passage (170), and
- at least one optical assembly (50) connected to the optical passage (110),
- the electrical and optical assemblies being arranged within the module housing (20),
- the optical and electrical assemblies being connected to one another via at least one optical interface, and
- the electrical assembly having at least one photodiode for converting the optical output signals of the optical assembly into electrical signals,
- wherein the optical assembly has at least one collimator (80) and on the output side transmitting at least one beam comprising collimated electromagnetic rays running parallel to one another via a free-radiating connection (180) as optical interface to the electrical assembly, and
- wherein the electrical assembly receives the beam from the optical assembly via the free-radiating connection,
**characterized in that**
- the optical assembly has an optical demodulation device (90), which converts a phase-modulated optical signal present on the input side into at least one signal pair comprising two amplitude-modulated optical signals (SP1, SP2) that are orthogonal to one another, and
- the optical assembly transmits the at least two orthogonal amplitude-modulated optical signals by means of a respective separate beam to the electrical assembly.

2. Detector module as claimed in Claim 1,
**characterized in that**
the collimator is connected on the input side to an optical waveguide (100) that is led through the optical passage.

3. Detector module as claimed in any of the preceding claims,
**characterized in that**
the electrical assembly contains an amplifier assigned to the photodiode.

4. Detector module as claimed in any of the preceding claims,
**characterized in that**
the photodiodes are formed by individual separate photodiodes or photodiode arrays (130) and the assigned amplifiers are formed by individual separate amplifiers or by amplifier arrays.

5. Detector module as claimed in any of the preceding claims,
**characterized in that**
the electrical assembly has at least one conductor track carrier (620) comprising wholly or partly HF optimized conductor tracks, wherein the electrical connections for the photodiode are situated on the top side of the conductor track carrier.

6. Detector module as claimed in any of the preceding claims,
**characterized in that**
the electrical assembly is mounted completely or in parts on the inner side of the module housing and is connected to the electrical passage.

7. Detector module as claimed in any of the preceding claims,
**characterized in that**
at least one, preferably all of the components forming the electrical assembly are configured in such a way that the assembly only has to be aligned relative to the electrical passage upon insertion into the module housing.

8. Detector module as claimed in any of the preceding claims,
**characterized in that**
the optical assembly has a carrier (70), at or on which the remaining components of the optical assembly are mounted.

9. Detector module as claimed in any of the preceding claims,
**characterized in that**
the optical assembly has at least one mechanical, electrical, electrothermal and/or electromechanical actuator.

10. Detector module as claimed in any of the preceding claims,
**characterized in that**
the electrical and optical assemblies are oriented with respect to one another in such a way that the top sides of the assemblies point in the same direction.

11. Detector module as claimed in any of the preceding claims,
**characterized in that**
the electrical assembly has at least one conductor track carrier (620) which is tilted with respect to the plane of the module housing base in such a way that it establishes or contributes to a height compensation between the height level of the optical free-radiating connection of the electrical assembly and the electrical passage of the module housing.

12. Detector module as claimed in any of the preceding claims,
**characterized in that**
the components of the electrical assembly are arranged in height-gradated fashion in such a way as to establish or contribute to a height compensation between the height level of the optical free-radiating connection of the electrical assembly and the electrical passage of the module housing.

13. Detector module as claimed in any of the preceding claims,
**characterized in that**
the electrical and optical assemblies are oriented with respect to one another in such a way that the top sides of the assemblies point in opposite directions.

14. Detector module as claimed in any of the preceding claims,
**characterized in that**
the electrical assembly has at least one lens which focuses a beam received from the optical assembly on the photodiode.

15. Detector module as claimed in any of the preceding claims,
**characterized in that**
between the electrical assembly and the optical assembly there are at least two parallel free-radiating connections with a respective beam, wherein the electrical assembly has a one-piece lens array (190) comprising at least two lenses for focusing the beams onto assigned photodiodes.

## Revendications

1. Module détecteur (10) pour la réception de signaux optiques (SE) avec
- un boîtier de module (20) possédant au moins un passage électrique et au moins un passage optique (110, 170),
- au moins un module électrique (60) en liaison avec le passage électrique (170) et
- au moins un module optique (50) en liaison avec le passage optique (110),
- les modules électrique et optique étant disposés dans le boîtier de module (20),
- les modules optique et électrique étant reliés l'un à l'autre par l'intermédiaire d'au moins une interface optique et
- le module électrique comportant au moins une photodiode pour la conversion des signaux optiques de sortie du modules optique en signaux électriques,
- le module optique comportant au moins un collimateur (80) et transmettant du côté de la sortie, au moins un faisceau de rayons électromagnétiques collimatés se propageant parallèlement les uns par rapport aux autres sur une liaison par rayons libres (180) formant une interface optique vers le module électrique et
- le module électrique recevant le faisceau de rayons du module optique par l'intermédiaire de la liaison par rayons libres,
**caractérisé en ce que**
- le module optique comporte un dispositif de démodulation optique (90) qui convertit un signal optique modulé en phase présent du côté de l'entrée, en au moins une paire de signaux avec deux signaux optiques (SP1, SP2) modulés en amplitude de manière mutuellement orthogonale, et
- le module optique transmet vers le module électrique, les au moins deux signaux optiques (SP1, SP2) modulés en amplitude de manière orthogonale avec chacun un faisceau de rayons séparé.

2. Module détecteur selon la revendication 1, **caractérisé en ce que** le collimateur est raccordé du côté de l'entrée à une fibre optique (100) traversant le passage optique.

3. Module détecteur selon une des revendications précédentes, **caractérisé en ce que** le module électrique contient un amplificateur affecté à la photodiode.

4. Module détecteur selon une des revendications précédentes, **caractérisé en ce que** la photodiode est constituée de photodiodes isolées séparées ou de mosaïques de photodiodes (130) et les amplificateurs affectés étant constitués d'amplificateurs isolées séparées ou de mosaïques d'amplificateurs.

5. Module détecteur selon une des revendications précédentes, **caractérisé en ce que** le module électrique comporte au moins un support de piste conductrice (620) avec des pistes conductrices totalement ou partiellement optimisées pour la HF, les liaisons électriques pour la photodiode se trouvant sur la face supérieure du support de piste conductrice.

6. Module détecteur selon une des revendications précédentes, **caractérisé en ce que** le module électrique est monté complètement ou en parties sur la face interne du boîtier des modules et relié au passage électrique.

7. Module détecteur selon une des revendications précédentes, **caractérisé en ce qu'**au moins un, de préférence tous les composants constituant le module électrique sont réalisés de telle sorte que lors de son insertion dans le boîtier des modules, il suffit d'ajuster le module par rapport au passage électrique.

8. Module détecteur selon une des revendications précédentes, **caractérisé en ce que** le module optique comporte un support (70) dans ou sur lequel sont montés les composants restants du module optique

9. Module détecteur selon une des revendications précédentes, **caractérisé en ce que** le module optique comporte au moins un élément de réglage mécanique, électrique, électrothermique et /ou électromécanique.

10. Module détecteur selon une des revendications précédentes, **caractérisé en ce que** les modules électrique et optique sont orientés l'un par rapport à l'autre de telle sorte que les faces supérieures des modules visent la même direction.

11. Module détecteur selon une des revendications précédentes, **caractérisé en ce que** le module électrique comporte au moins un support de piste conductrice (620) basculé par rapport au plan de l'embase du boîtier des modules de manière à réaliser ou à contribuer à une mise à niveau en hauteur entre le niveau en hauteur de la liaison optique par rayons libres du module électrique et le passage électrique du boîtier des modules.

12. Module détecteur selon une des revendications précédentes, **caractérisé en ce que** les composants du module électrique sont étagés en hauteur de manière à réaliser ou à contribuer à une mise à niveau en hauteur entre le niveau en hauteur de la liaison optique par rayons libres du module électrique et le passage électrique du boîtier des modules.

13. Module détecteur selon une des revendications précédentes, **caractérisé en ce que** les modules électrique et optique sont orientés l'un par rapport à l'autre de telle sorte que les faces supérieures des modules visent des directions opposées.

14. Module détecteur selon une des revendications précédentes, **caractérisé en ce que** le module électrique comporte au moins une lentille qui focalise sur la photodiode, un faisceau de rayons reçu du module optique.

15. Module détecteur selon une des revendications précédentes, **caractérisé en ce qu'**entre le module électrique et le module optique, au moins deux liaisons parallèles par rayons libres constituée chacune d'un faisceau de rayons, le module électrique comportant une mosaïque en une partie de lentilles (190) avec au moins deux lentilles pour focaliser les faisceaux sur la photodiode affectée.
